(19) **Europäisches Patentamt / European Patent Office / Office européen des brevets**

(11) **EP 1 298 020 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***B60T 8/00*** *(2006.01)*

(21) Anmeldenummer: **02017342.3**

(22) Anmeldetag: **02.08.2002**

(54) **Verfahren zur Ermittlung der Masse eines Kraftfahrzeugs unter Berücksichtigung unterschiedlicher Fahrsituationen**

Vehicle mass determination method taking into account different driving situations

Procédé pour déterminer la masse d'un véhicule automobile en tenant compte des differentes situations de counduit

(84) Benannte Vertragsstaaten:
**DE FR GB IT SE**

(30) Priorität: **28.09.2001 DE 10148096**

(43) Veröffentlichungstag der Anmeldung:
**02.04.2003 Patentblatt 2003/14**

(73) Patentinhaber: **Bayerische Motoren Werke Aktiengesellschaft**
**80809 München (DE)**

(72) Erfinder:
• **Flechtner, Horst**
**85748 Garching (DE)**
• **Pauly, Axel**
**85757 Karlsfeld (DE)**

(56) Entgegenhaltungen:

| | |
|---|---|
| EP-A- 0 932 033 | DE-A- 10 039 458 |
| DE-A- 19 603 430 | DE-A- 19 724 092 |
| DE-A- 19 755 112 | US-A- 5 832 400 |

EP 1 298 020 B1

**Beschreibung**

Die Erfindung betrifft ein Verfahren zur Ermittlung der Masse eines Kraftfahrzeugs unter Berücksichtigung unterschiedlicher Fahrsituationen mit Auswertung der jeweiligen Fahrzeug-Beschleunigung, wobei neben der Antriebskraft eines Fahrzeug-Antriebsaggregats die jeweiligen Widerstandskräfte, resultierend aus rotatorischen Kräften, aus dem Luftwiderstand, aus dem Rollwiderstand und aus der Hangabtriebskraft, berücksichtigt werden. Zum technischen Umfeld wird neben der DE 197 24 092 A1 und der DE 100 39 458 A1 auf die DE 197 28 867 A1 verwiesen.

Beispielsweise für komplexere, in der Entwicklung befindliche Fahrwerkregelsysteme ist es erwünscht bzw. erforderlich, Kenntnisse über die aktuelle Masse bzw. das aktuelle Gewicht eines Kraftfahrzeugs, auch eines Personenkraftwagens, vorliegen zu haben. Naturgemäß kann das Gesamtgewicht eines bestimmten Fahrzeugs in Abhängigkeit vom Beladungszustand und vom Füllstand insbesondere des Kraftstoff-Vorratsbehälters über einen relativ weiten Bereich unterschiedlich sein. Die auf den ersten Blick einfachste Lösung zur Bestimmung des Fahrzeug-Gewichts mittels geeignet in den Radaufhängungen angebrachter Kraftmessfühler ist für einen Serieneinsatz u.a. aus Kostengründen nicht realisierbar. Gleiches gilt bezüglich einer Druckmessung in einem Fahrzeug-Luftfedersystem, falls das Fahrzeug überhaupt mit einem Luftfedersystem ausgerüstet ist.

Beispielsweise aus den o.g. Schriften ist ein anderer Ansatz bekannt, der bislang jedoch nur für Nutzkraftfahrzeuge, d.h. Lastkraftwagen o.ä. erprobt wurde. Bei der DE 197 28 867 A1 wird ein die Fahrzeugmasse repräsentierender Massewert eines mit einer Antriebseinheit ausgestatteten Nutzkraftfahrzeugs ermittelt, indem wenigstens ein erster sowie ein zweiter Beschleunigungswert des Fahrzeugs erfasst wird. Diese Beschleunigungswerte repräsentieren die Fahrzeugbeschleunigung zu einem ersten und einem zweiten Zeitpunkt, zu denen auch die Antriebskraft oder das Antriebsmoment repräsentierende Antriebswerte erfasst werden. Wenigstens abhängig von den erfassten Beschleunigungswerten und den erfassten Antriebswerten wird dann wenigstens ein erster und ein zweiter Fahrwiderstandswert bestimmt. Dabei geschieht die Ermittlung des Fzg.-Massewertes abhängig von einem Vergleich wenigstens des bestimmten ersten Fahrwiderstands- oder Masseschätzwerts mit dem bestimmten zweiten Fahrwiderstands- oder Masseschätzwert. Durch diesen Vergleich kann eine Fahrbahnneigung erkannt werden, wodurch eine durch die Fahrbahnneigung bedingte fehlerhafte Masse-Bestimmung vermieden werden soll.

Nach der oben erstgenannten DE 197 24 092 A1 wird die Fahrzeugmasse eines Nutzkraftfahrzeugs mit einem Zugfahrzeug und einem Anhänger bzw. Auflieger, das eine betätigbare Bremseinrichtung, die auf die Räder des Zugfahrzeugs und Anhängers/Aufliegers wirkt, ebenfalls über die Fahrzeugbeschleunigung ermittelt. Erfasst wird ein erster Beschleunigungswert, der die Fahrzeugbescheunigung vor einer Betätigung der Bremseinrichtung repräsentiert und wenigstes ein zweiter Beschleunigungswert, der die Fahrzeugbescheunigung nach einer Betätigung der Bremseinrichtung repräsentiert. Die Fahrzeugmasse bzw. ein die Fahrzeugmasse repräsentierendes Signal wird dann in Abhängigkeit von dem ersten und zweiten erfassten Beschleunigungswert ermittelt bzw. erzeugt.

Aus der Tatsache, dass diese bekannten Masse-Ermittlungsverfahren oder Masse-Schätzverfahren nur für relativ schwere Nutzkraftfahrzeuge erprobt sind, kann geschlossen werden, dass diese Verfahren relativ ungenau arbeiten, d.h. eine relativ große Streuung der Messergebnisse aufweisen, was jedoch bei schweren Nutzkraftfahrzeugen, deren Leergewicht und Beladungsgewicht sich erheblich voneinander unterscheiden, toleriert werden kann. Deutlich genauere Ergebnisse sollten derartige Verfahren jedoch bei Personenkraftwagen liefern, da andernfalls eine derartige Berechnung praktisch nicht durchgeführt werden müsste, sondern einfach ein Näherungswert, der aus dem Leergewicht sowie einer mittleren Zuladung gebildet wird, verwendet werden könnte.

Aufgabe der vorliegenden Erfindung ist es somit, ein Verfahren zur Ermittlung der Masse eines Kraftfahrzeugs nach dem Oberbegriff des Anspruchs 1 dahingehend weiterzubilden, dass eine ausreichend genaue Masse-Abschätzung praktisch nur aus denjenigen Informationen, die bereits im Fahrzeug vorliegen bzw. durch geeignete Sensor- oder Signalauswertung gewonnen werden können, ermöglicht wird.

Die Lösung dieser Aufgabe ist dadurch gekennzeichnet, dass zur Berücksichtigung der Hangabtriebskraft die jeweilige Fahrbahnsteigung ermittelt wird, indem mittels eines im Fahrzeug vorhandenen Längsbeschleunigungssensors die in Horizontalrichtung auftretende Beschleunigung bestimmt und in Relation zur in Fahrbahnrichtung auftretenden Beschleunigung gesetzt wird, und dass zusätzlich der mittels einer geeigneten Sensorik bestimmbare Nickwinkel des Fahrzeug-Aufbaus berücksichtigt wird.

Erfindungsgemäß erfolgt eine detaillierte, d.h. möglichst genaue Berücksichtigung der jeweils wirksamen Hangabtriebskraft, indem die aktuelle tatsächliche Farbahnsteigung bestimmt wird und in die Berechnung bzw. Abschätzung der Fzg.-Masse mit eingeht. Insofern unterscheidet sich das Verfahren der vorliegenden Erfindung wesentlich vom bekannten Stand der Technik nach der o.g. DE 197 28 867 A1, da dort lediglich ermittelt wird, ob eine Fahrbahnsteigung (oder ein Gefälle) vorliegt und ob demzufolge bei der Masse-Ermittlung eine Hangabtriebskraft wirksam war. Bejahendenfalls wird im bekannten Stand der Technik das dann gefundene Ergebnis verworfen.

Mit der vorliegenden Erfindung hingegen werden gezielt Berechnungen zur Ermittlung der Fzg.-Masse unter Einwirkung einer Hangabtriebskraft durchgeführt, d.h. wenn das Fahrzeug entweder bergauf oder bergab fährt. Dies ist, falls die jeweilige Fahrbahnneigung gegenüber der Horizontal-Ebene (Steigung bzw. Gefälle) bekannt ist, insofern besonders vorteilhaft, als hierbei relativ stationäre Fahrzustände herrschen können. Oftmals ist bereits die Fahrbahnneigung über eine längere Strecke relativ konstant. Oftmals wird das Fahrzeug beim Befahren einer Steigung mit relativ konstanter Antriebsleistung (im Idealfall mit dem maximalen Antriebsmoment des Fzg.-Antriebsaggregats) bewegt. Auch auf einer Gefällestrecke wird das Fahrzeug oftmals frei rollen gelassen, so dass als einzige Vortriebskraft die aus der Steigung einfach ableitbare Hangabtriebskraft wirkt. Dabei ist vorteilhafterweise das (bremsende) Schleppmoment des Fzg.-Antriebsaggregats insbesondere bei höherer Getriebeübersetzung im Vergleich zur Hangabtriebskraft äußerst gering und zudem relativ gut abschätzbar.

Was nun die aus dem Steigungswiderstand (bzw. aus einem Gefälle, d.h. allg. aus einer Fahrbahn-Neigung in Fahrtrichtung) resultierende Hangabtriebskraft betrifft, so kann die Fahrbahnsteigung oder -Neigung relativ genau mittels eines im Fahrzeug vorhandenen Längsbeschleunigungssensors ermittelt werden. Ein derartiger Längsbeschleunigungssensor kann die in Horizontalrichtung auftretende Beschleunigung des Fahrzeugs bestimmen. Aus der Änderungsgeschwindigkeit der Fahrzeug-Rad-Drehzahl kann andererseits die in Fahrbahnrichtung (unter Berücksichtigung der Fahrbahnneigung gegenüber der Horizontal-Ebene) auftretende Beschleunigung des Fahrzeugs einfach bestimmt werden. Werden nun diese beiden ermittelten Beschleunigungen (die negativ oder positiv sein können) zueinander in Relation gesetzt, so ist hieraus auf einfache Weise die Fahrbahn-Neigung in Fahrtrichtung (Steigung oder Gefälle) und somit der Neigungswinkel der Fahrbahn gegenüber der Horizontal-Ebene (in Fahrtrichtung betrachtet und an späterer Stelle durchgängig mit dem Buchstaben β bezeichnet) bestimmbar. Vorteilhafterweise kann dabei das entsprechende Signal großzügig gefiltert werden, da die Störungen durch Fahrbahnunebenheiten am Raddrehzahlsignal im Vergleich zur Beschleunigung sehr hochfrequent sind.

Zwar ist aus der eingangs bereits genannten DE 100 39 458 A1 eine Bestimmung der Fahrbahn-Neigung auf diese Weise bereits bekannt, jedoch wird vorliegend zur Steigerung der Genauigkeit weiterhin vorgeschlagen, zusätzlich den mittels einer geeigneten Sensorik bestimmbaren Nickwinkel des Fahrzeug-Aufbaus gegenüber dem Fahrwerk zu berücksichtigen. Eine entsprechende Sensorik ist bereits serienmäßig an allen Fahrzeugen / PKWs vorhanden, die entweder mit Luftfederung oder mit Xenon-Scheinwerfern ausgerüstet sind. Mit Hilfe dieser Sensorik kann der Nickwinkelfehler aus dem Steigungssignal kompensiert werden. Dies empfiehlt sich insbesondere bei komfortabel abgestimmter Fzg.-Federung im Hinblick auf eine zuverlässige Steigungserkennung, während dies bei einer sehr straffen Federungsabstimmung nicht erforderlich ist.

Durch die Möglichkeit, eine Fahrbahn-Steigung explizit und möglichst genau zu berücksichtigen, wird eine deutlich gesteigerte Verbesserung gegenüber dem bekannten Stand der Technik erreicht. Dabei ist diese SteigungsErkennung relativ günstig umsetzbar. Wenn erst einmal die Steigung bekannt ist, sind je nach aktueller Fahrsituation Schlüsse auf andere Parameter des Fahrwiderstandes möglich. Fehler des Steigungssignals durch starke Fahrwerksverspannungen bei Beschleunigung in starken Steigungen sind erkennbar und somit vermeidbar. Ein großer Vorteil der Steigungsauswertung besteht ferner darin, dass auch Fahrsituationen mit sehr niedriger Beschleunigung ausgewertet werden können; bei starker Steigung sogar Fahrsituationen mit konstanter Fahr-Geschwindigkeit. Die Auswertung kleinerer Beschleunigungen in der Ebene führt nämlich auch nach Glättung des Geschwindigkeitssignals zu großen Unsicherheiten. Außerdem sind häufig vorkommende Fahrsituationen im Schubbetrieb nur in Verbindung mit einem Neigungssignal zuverlässig auswertbar.

Im Sinne einer vorteilhaften Weiterbildung kann neben der Antriebskraft des Fahrzeug-Antriebsaggregats und den bereits genannten Widerstandskräften, resultierend aus rotatorischen Kräften, aus dem Luftwiderstand, aus dem Rollwiderstand und aus der Hangabtriebskraft, die selbstverständlich auch den Widerstand reduzieren kann, im gleichen Ansatz zusätzlich die jeweilige Bremskraft berücksichtigt werden. Dabei empfiehlt es sich, eine Vielzahl unterschiedlicher Fahrsituationen auszuwerten, derart, dass die einzelnen Resultate jeweils gespeichert und zu einem gesamtheitlichen Massenwert zusammengefasst werden.

Dann können praktisch sämtliche Fahrzustände des Fahrzeugs für eine Auswertung des gesamtheitlichen Ansatzes, mit Hilfe dessen die Fahrzeugmasse bestimmt werden kann, herangezogen werden. Insbesondere kann nicht nur eine positive Beschleunigung in der (Horizontal-)Ebene, sondern auch eine negative Beschleunigung, d.h. ein Abbremsvorgang, berücksichtigt werden. Insbesondere ist auch eine Auswertung unter Einwirkung einer Hangabtriebskraft möglich sein, d.h. wenn das Fahrzeug nicht in der (Horizontal-)Ebene, sondern bergauf oder bergab bewegt wird. Mithilfe des sog. gesamtheitlichen Ansatzes kann immer dann, wenn zumindest für eine geringe Zeitspanne ein quasistationärer Zustand vorliegt, insbesondere ein solcher mit einer im wesentlichen konstanten Fzg.-Beschleunigung - hierunter ist auch die Beschleunigung des Fahrzeugs in geodätischer Vertikalrichtung zu verstehen - , die Fahrzeugmasse bzw. ein diese repräsentierender Wert berechnet werden. Hierdurch stehen binnen kürzester Zeit und insbesondere ohne dass sich in dieser Zeit die Fzg.-Masse nennenswert ändern konnte, eine Vielzahl von gewonnenen Werten für die Fahrzeugmasse zur Verfügung. Diese Werte können dann geeignet weiterverarbeitet, im einfachsten Fall gemittelt werden, um einen relativ exakten Schätzwert für die Fahrzeugmasse zu erhalten.

Zur Qualitäts-Steigerung des Ermittlungs-Ergebnisses können unterschiedliche Fahrzustände unterschiedlich stark gewichtet in die Ermittlung der gesamtheitlich berechneten Fzg.-Masse eingehen. Beispielsweise können Fahr-Zustände, in denen das Fzg. eine positive Beschleunigung erfährt, zumindest bei vollständig eingefahrenem Antriebsaggregat, d.h. wenn dieses keine übermäßigen Reibungsverluste mehr aufweist und somit seinen üblichen Wirkungsgrad erreicht hat, stärker gewichtet berücksichtigt werden, als Abbremsvorgänge, insbesondere wenn die Größe des Reibwerts zwischen Bremsscheibe und Bremsbelag bspw. aufgrund hoher Temperaturen zweifelhaft ist. Umgekehrt kann bei noch nicht vollständig eingefahrenem Antriebsaggregat das aus einer positiven durch dieses Antriebsaggregat hervorgerufenen Beschleunigung gewonnene Ergebnis geringer gewichtet werden, als bspw. das durch eine positive Fzg.-Beschleunigung, die aus einer Hangabtriebskraft resultiert, gewonnene Ergebnis für die Fzg.-Masse. Grundsätzlich können somit bei der Gewichtung auch Faktoren wie die Betriebstemperatur von Antriebsaggregat und Getriebe, die im Zusammenhang mit anderen Einflussparametern deren Wirkungsgrad beeinflussen, berücksichtigt werden. Ein weiterer Aspekt bei der Gewichtung kann die jeweils aktuelle Fahrsituation sein, denn je nach auswertbarer Zeitdauer und auftretender Vertikal-, Längs- sowie Querdynamik kann die Zuverlässigkeit der Abschätzung variieren. Weitere Faktoren mit Einfluss auf die Gewichtung sind die Kurvenradien und der Einsatz von Fahrdynamikregelsystemen.

Im Detail kann die Fahrzeuggesamtmasse nach folgendem Ansatz abgeschätzt werden:

$$F = m \cdot a_{eff} = F_{Motor} - F_{rot} - F_{Luftwiderstand} - F_{Rollwiderstand} - F_{Steigung} - F_{Brems} \, ,$$

wobei "F" für eine Kraft steht, "m" die Fahrzeugmasse darstellt und "$a_{eff}$" die effektive Beschleunigung des Fahrzeugs wiedergibt. Die Antriebskraft des Fzg.-Antriebsaggregates ist "$F_{Motor}$", die wirksamen rotatorischen Kräfte sind in "$F_{rot}$" enthalten und der Luftwiderstand des Fahrzeugs wird in der Größe "$F_{Luftwiderstand}$" berücksichtigt. Der Rollwiderstand des Fahrzeugs geht über "$F_{Rollwiderstand}$" in den obigen Ansatz ein, während eine Hangabtriebskraft über den Term "$F_{Steigung}$" und die jeweilige Bremskraft durch "$F_{Brems}$" berücksichtigt wird.

Durch Umstellung des obigen Ansatzes ergibt sich:

$$m = ( F_{Motor} - F_{rot} - F_{Luftwiderstand} - F_{Brems} ) / ( dv/dt + g \cdot \sin(\beta) + g \cdot c_{Roll} ),$$

wobei anstelle der Beschleunigung "$a_{eff}$" das zeitliche Differential der Fzg.-Geschwindigkeit "v" gesetzt ist, "$C_{Roll}$" den Rollwiderstandsbeiwert des Fahrzeugs wiedergibt und "g" für die Erdbeschleunigung (9,81 m/s$^2$) steht. Ebenso wie letztere kann der Rollwiderstandsbeiwert "$C_{Roll}$" als konstant (und im wesentlichen unabhängig von der Art des Bereifung) betrachtet werden. Der Winkel β schließlich gibt den Neigungswinkel der Fahrbahn an und repräsentiert somit die Hangabtriebskraft bzw. die Kraft "Fsteigung", und zwar sowohl bei einer positiven Steigung als auch bei einem Gefälle, wenn dann für β ein negativer Wert gesetzt wird.

Neu an diesem Ansatz gegenüber dem bislang bekanten Stand der Technik ist, dass je nach Fahrsituation auch der Steigungswiderstand sowie die Bremskraft bestimmt und berücksichtigt werden und verschiedene (unterschiedliche) Fahrsituationen zur Absicherung anderer Ergebnisse benutzt werden. Durch Auswertung möglichst aller vorkommender Situationen und ggf. anschließender unterschiedlicher Gewichtung (mittels geeigneter Gewichtungs-Faktoren) von mehr oder weniger vorteilhaften Fahrsituationen ist eine höhere Genauigkeit und Zuverlässigkeit der Massenabschätzung eines Fahrzeugs als im bekannten Stand der Technik erreichbar. Die Grundidee der vorliegenden Erfindung ist also, aus möglichst vielen Messungen die jeweils besten Ergebnisse gegeneinander zu vergleichen und aus diesen Betrachtungen ein besseres Ergebnis für die Fahrzeugmasse zu erhalten.

Was nun die wirksamen Kräfte entsprechend des obigen gesamtheitlichen Ansatzes betrifft, so ist die Antriebskraft "$F_{Motor}$" bei vielen derzeit gebauten PKWs bereits über das elektronische Fahrzeug-Bordnetz abfragbar. Die rotatorischen Kräfte "$F_{rot}$" des obigen Ansatzes können durch Abschätzung der jeweils gültigen Übersetzungen und Trägheitsmomente gewonnen werden. Der Luftwiderstand bzw. die entsprechende Kraft $F_{Luftwiderstand}$ ist für das Fahrzeug in der Größenordnung bekannt bzw. mit Hilfe des bekannten Luftwiderstandsbeiwertes, der bekannten Fzg.-Stirnfläche sowie der aktuellen Fzg.-Geschwindigkeit berechenbar; dabei können größere Fehlermöglichkeiten durch Beschränkung auf einen niedrigeren Geschwindigkeitsbereich (bspw. auf unter ca. 70 km/h) ausgeschlossen werden. Dies vermeidet auch Fehler durch Dach-Gepäckträger oder durch Gegenwind bzw. Rückenwind im höheren Geschwindigkeitsbereich, da bekanntlich die Kraft proportional zum Quadrat der Geschwindigkeit "v" ist.

In diesem Zusammenhang sei darauf hingewiesen, dass durchaus der Luftwiderstand des Fahrzeugs aus der Fahrdynamik bestimmt werden kann. So "bremst" beispielsweise bei einer Bergabfahrt mit hoher Geschwindigkeit ohne zusätzliche Bremskraft und sehr niedrigem Moment des Antriebsaggregats in erster Linie nur der Luftwiderstand und es ist ein Vergleich mit dem Sollwert hierfür möglich. Dieser Effekt sollte dabei über eine längere Zeitspanne und auch über alle Richtungen auftreten, d.h. ohne Störungen bspw. durch Gegenwind. Hieraus können dann bspw. Dachlasten erkannt werden bzw. es ist allgemein eine Adaption des $C_w$-Werts für andere Fahrsituationen möglich, ferner eine sehr grobe Schlussfolgerung auf die Schwerpunktshöhe des Kraftfahrzeugs.

Im übrigen hat die im vorletzten Absatz vorgeschlagene Beschränkung auf einen niedrigeren Geschwindigkeitsbereich den Vorteil, dass in diesem Geschwindigkeitsbereich auch der Rollwiderstand annähernd konstant und somit fast unabhängig von der möglichen Serienbereifung des Fahrzeugs / PKW's ist. Im übrigen kann ein deutlich erhöhter Rollwiderstand, bspw. durch Schnee auf der Fahrbahn hervorgerufen, aus Raddrehzahlvergleichen zwischen den einzelnen Rädern erkannt werden. Dies wäre dann bspw. ein Fall, in dem ein o.g. Gewichtungsfaktor für die entsprechende Masse-Ermittlung auf einen sehr niedrigen Wert gesetzt werden sollte.

In diesem Zusammenhang sei noch erwähnt, dass eine Auswertung von genügend langen Getriebe-Schaltpausen bei relativ niedriger Fzg.-Geschwindigkeit, während derer keine Antriebskraft "$F_{Motor}$" wirkt, insbesondere bei Kenntnis der Hangabtriebskraft, d.h. der Fahrbahn-Neigung (Steigung oder Gefälle) eine zwar grobe, aber zumeist ausreichend genaue Aussage zur Summe aus aktuellem Roll- und Luftwiderstand erlaubt, so dass ein entsprechender Wert für darauffolgende Berechnungen gespeichert werden kann. Im übrigen kann die Eckfrequenz der Tiefpassfilterung der Raddrehzahlsignale an die auszuwertende Situation angepasst werden, was mit reduzierter Genauigkeit auch die Auswertung relativ kurzer Fahrsituationen ermöglicht.

Was die Bremskraft des obigen gesamtheitlichen Ansatzes betrifft, so ist diese aus der Kraft zwischen dem Bremsbelag bzw. dem diesen bewegenden Bremskolben und der zugehörigen Bremsscheibe oder dgl. bestimmbar. Unter Berücksichtigung des dort relevanten Reibwertes kann die am Rad wirkende Bremskraft bestimmt werden, aus der das jeweilige Bremsmoment an der Bremsscheibe und somit am jeweiligen Rad ableitbar ist und woraus sich die gesuchte Brems-Längskraft, die im obigen gesamtheitlichen Ansatz als "Bremskraft" bezeichnet ist, ergibt.

Insbesondere bei zukünftigen elektrohydraulischen Bremssystemen wird je Rad ein genaues Drucksignal "p" vorliegen, um ein Schiefziehen der Bremsen zu vermeiden. Daraus kann nach obigem Ansatz die Bremskraft relativ genau bestimmt werden, wenn eine Abschätzung für den Reibwert der Radbremse vorliegt. Der Reibwert $\mu$ hängt von der Bremsentemperatur, dem zurückliegenden Fahrstil und möglichen Aufträgen auf der Bremsscheibe bzw. allgemein auf den Reibpartnern des Bremssystems ab.

Im übrigen kann auch bei künftigen neuartigen Bremsensystemen, bspw. auf elekromechanischer Basis, die Bremskraft aus der dort benötigten Zustellkraft der Beläge und deren Reibwert abgeschätzt werden. Auch bei alternativen Bremssystemen, wie z.B. Wirbelstrombremsen oder Retardern, kann eine Bremskraft abgeschätzt werden, weshalb allgemein die Bremskraft aus aktuellen Betriebsdaten über das oder die im Fahrzeug vorhandene(n) Bemssystem(e) abgeschätzt werden kann.

Im übrigen können auch bei der Berücksichtigung der Bremskraft Fahrsituationen, die zu ungenauen bzw. falschen Ergebnissen führen würden, ausgeschlossen werden, bspw. mit Hilfe der weiter oben erläuterten Gewichtung bzw. eines entsprechenden Gewichtungsfaktors. So kann beispielsweise berücksichtigt werden, wenn vermutlich eine heiße bzw. überhitzte Bremse vorliegt, oder wenn man sich in der Anfangsphase eines Bremsvorganges befindet, in der bspw. erst ein Trockenbremsen der Bremsscheibe erfolgt, und weiteres mehr.

Damit sind nur noch längerfristige Schwankungen des Reibwertes zu berücksichtigen. Um diese in den Griff zu bekommen, kann aus gut brauchbaren Auswertungen von Beschleunigungsvorgängen (ohne Bremskraft) oder Bremswegabschätzungen eine Masse des Fahrzeugs angenommen werden. Aus einer darauf folgenden Abbremsung, welche die Rahmenbedingungen für gut brauchbare Signalqualität erfüllt, wird dann der Reibwert der Bremse abgeschätzt. Damit sind dann auch Abbremsungen im Komfortbereich für eine Massenschätzung auswertbar.

Ferner kann die Bremskraft aus einem Vergleich mit dem während des Bremsvorgangs zurückgelegten Weg ermittelt werden, d.h. zunächst einmal bei Bremsungen im Komfortbereich ohne nennenswerten Schlupf ist über den Vergleich mit dem Wegsignal, d.h. dem beim Bremsen zurückgelegten Weg ein Schluss auf noch offene Parameter möglich, und zwar gemäß dem folgenden Ansatz: ($0,5 \cdot m \cdot \Delta v^2 = F_{Brems} \cdot Weg$).

Insgesamt stehen somit mehrere, zumindest zwei voneinander im wesentlichen unabhängige Massenschätzwerte zur Verfügung, was die Zuverlässigkeit des entsprechenden Signals bei Berücksichtigung der Randbedingungen gegenüber dem bekannten Stand der Technik wesentlich erhöht. Beispielsweise kann ein erster Masse-Schätzwert im Rahmen einer längeren Konstant-Beschleunigung in der Horizontalebene, z.B. während einer Autobahn-Einfahrt, ermittelt werden. Beispielsweise kann ein zweiter Schätzwert für die Fahrzeug-Masse beim Befahren einer konstanten Fahrbahnneigung (im Sonderfall ohne damit verbundener Geschwindigkeitsänderung) ermittelt werden. Beispielsweise kann ein dritter Schätzwert für die Fahrzeug-Masse beim Abbremsen mit im Sonderfall konstanter Verzögerung ermittelt werden. All diese und weitere Schätzwerte können geeignet berücksichtigt, ggf. unterschiedlich stark gewichtet und geeignet miteinander verglichen werden, um ein möglichst genaues Resultat für die Masse des Fahrzeugs zu erlangen.

**Patentansprüche**

1. Verfahren zur Ermittlung der Masse eines Kraftfahrzeugs unter Berücksichtigung unterschiedlicher Fahrsituationen mit Auswertung der jeweiligen Fahrzeug-Beschleunigung, wobei neben der Antriebskraft eines Fahrzeug-Antriebsaggregats die jeweiligen Widerstandskräfte, resultierend aus rotatorischen Kräften, aus dem Luftwiderstand, aus dem Rollwiderstand und aus der Hangabtriebskraft, berücksichtigt werden, **dadurch gekennzeichnet, dass** zur Berücksichtigung der Hangabtriebskraft die jeweilige Fahrbahnsteigung ermittelt wird, indem mittels eines im Fahrzeug vorhandenen Längsbeschleunigungssensors die in Horizontalrichtung auftretende Beschleunigung bestimmt und in Relation zur in Fahrbahnrichtung auftretenden Beschleunigung gesetzt wird und dass zusätzlich der mittels einer geeigneten Sensorik bestimmbare Nickwinkel des Fahrzeug-Aufbaus berücksichtigt wird.

2. Verfahren nach Anspruch 1,
**dadurch gekennzeichnet, dass** im gleichen Ansatz zusätzlich die jeweilige Bremskraft berücksichtigt wird, und dass eine Vielzahl unterschiedlicher Fahrsituationen ausgewertet wird, wobei die einzelnen Resultate jeweils gespeichert und zu einem gesamtheitlichen Massenwert zusammengefasst werden.

3. Verfahren nach Anspruch 2,
**dadurch gekennzeichnet, dass** bei der Ermittlung des gesamtheitlichen Massenwertes unterschiedliche Fahrsituationen unterschiedlich gewichtet werden.

## Claims

1. A method for determining the mass of a motor vehicle while taking account of differing driving situations with evaluation of the respective vehicle acceleration, account being taken of, in addition to the drive force of a vehicle drive unit, the respective resistance forces, resulting from rotatory forces, from the air resistance, from the rolling resistance and from the gravitational force due to the gradient, **characterised in that** to take account of the gravitational force due to the gradient, the respective upward slope of the road is determined **in that**, using a longitudinal acceleration sensor present in the vehicle, the acceleration occurring in the horizontal direction is determined and related to the acceleration occurring in the road direction and **in that** account is additionally taken of the pitch angle, which can be determined using suitable sensors, of the vehicle construction.

2. A method according to claim 1, **characterised in that** in the same formulation account is additionally taken of the respective braking force and **in that** a large number of differing driving situations are evaluated, the individual results being respectively stored and combined to form an all-encompassing mass value.

3. A method according to claim 2, **characterised in that** differing driving situations are weighted differently in the determination of the all-encompassing mass value.

## Revendications

1. Procédé pour déterminer la masse d'un véhicule automobile en tenant compte des différentes situations de conduite par l'exploitation de l'accélération respective du véhicule, procédé selon lequel en plus de la force d'entraînement fournie par l'unité d'entraînement du véhicule, on tient compte des forces résistantes respectives résultant des forces de rotation, de la résistance de l'air et de la résistance au roulage ainsi que de la poussée en pente,
**caractérisé en ce que**
pour tenir compte de la poussée en pente, on détermine l'inclinaison respective de la chaussée en déterminant à l'aide d'un capteur d'accélération longitudinale équipant le véhicule, l'accélération dans la direction horizontale et en la mettant en relation avec l'accélération dans la direction de la chaussée et
en plus on tient compte de l'angle de tangage de la carrosserie du véhicule, déterminé par des capteurs appropriés.

2. Procédé pour déterminer la masse d'un véhicule automobile selon la revendication 1,
**caractérisé en ce que**
dans la même proposition on tient en outre compte de la force de freinage respective et
on exploite un grand nombre de situations de conduite différentes,
les différents résultats étant chaque fois mémorisés et regroupés en une valeur de masse globale.

3. Procédé pour déterminer la masse d'un véhicule automobile selon la revendication 2,
**caractérisé en ce qu'**
en déterminant la valeur de masse globale, on pondère les différentes situations de conduite.

**IN DER BESCHREIBUNG AUFGEFÜHRTE DOKUMENTE**

**In der Beschreibung aufgeführte Patentdokumente**

- DE 19724092 A1
- DE 10039458 A1
- DE 19728867 A1